# EUROPEAN PATENT SPECIFICATION

(11) **EP 1 952 869 B1**
(45) Date of publication and mention of the grant of the patent: **22.12.2010**
(21) Application number: 06822498.9
(22) Date of filing: 27.10.2006
(51) Int. Cl.: B01D 29/07, B01D 27/00, B01D 46/52, F02M 37/22

(54) **FILTER DEVICE AND FILTER ELEMENT**
FILTERVORRICHTUNG UND FILTERELEMENT
DISPOSITIF DE FILTRATION ET ELEMENT FILTRANT

(30) Priority: 31.10.2005 JP 2005316532
(43) Date of publication of application: 06.08.2008
(73) Proprietor: Nippon Rokaki Co., Ltd., Tokyo 158-0081 (JP)
(72) Inventor: IWAKATA, Keisaku, Setagaya-ku, Tokyo 158-0081 (JP); ABE, Takashi, Setagaya-ku, Tokyo 158-0081 (JP)
(74) Representative: Kramer - Barske - Schmidtchen
(86) International application number: PCT/JP2006/321537
(87) International publication number: WO 2007/052563

(56) References cited:
- WO-A-00/40319
- WO-A-2004/041407
- DE-A1- 10 155 879
- JP-A- 2002 129 925
- JP-A- 2003 175 309
- JP-Y2- 60 034 329
- US-A- 2 101 811
- US-A- 3 260 370

## Description

### TECHNICAL FIELD

The present invention relates to a filter apparatus for filtering a fluid such as fuel, water, oil, air, etc.

### BACKGROUND ART

In a filter apparatus, a filterability more than a conventional one is sometimes demanded, according to an industrial innovation or the like in a technical field in which the filter apparatus is used. In a field of a diesel engine, for example, a technique, which is referred to as a so-called next generation diesel, provided with a fuel system of a high pressure injection has appeared in accordance with a strict environmental regulation. In the field of the next generation diesel engine described above, since an abrasion or galling of a component constituting the fuel injection system greatly affects its service life, fuel should be controlled to be in a cleaner condition.

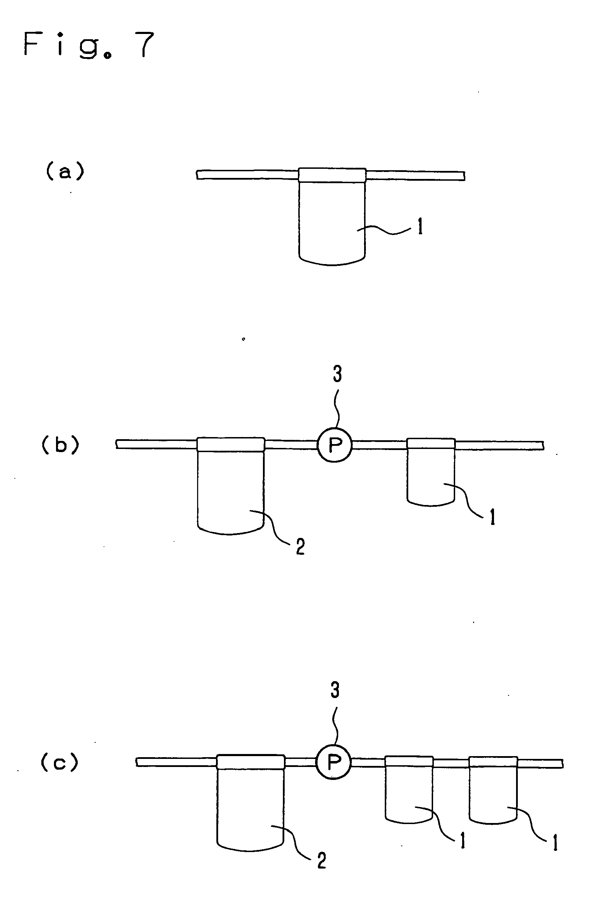

For example, a demanded cleanliness of a fuel is conventionally maintained only by a high-efficient main filter 1 as shown in FIG. 7 (a) , while in the field of the next-generation diesel engine, this configuration cannot sometimes keep the demanded cleanliness of a fuel. Therefore, in order to keep the demanded cleanliness of a fuel, a structure having a combination of a prefilter 2 and a main filter 1 through a pump 3 as shown in FIG. 7 (b) or a structure having a combination of a prefilter 2 and two main filters 1 through a pump 3 as shown in FIG. 7(c) is needed.

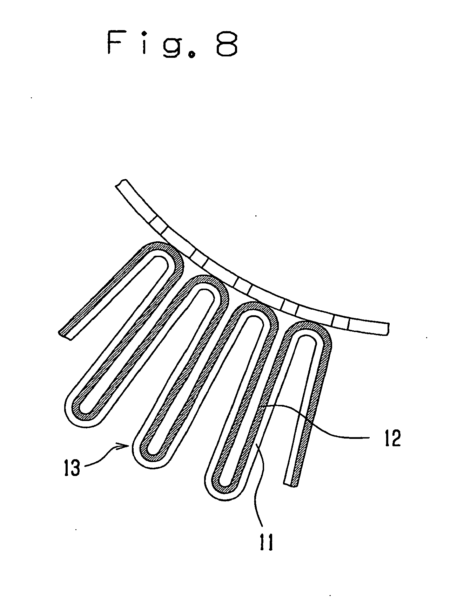

However, in order to construct the filter system shown in FIG. 7 (b) or FIG. 7 (c), a space efficiency is inevitably reduced, and further, cost is increased. In view of this, it is considered that a filter body 13 as shown in FIG. 8, which has conventionally been known and has a double structure with plural filter media 11 and 12 overlapped with one another, is used. However, with this structure, an effect due to a cake layer cannot be provided to the filter media 11 and 12. Specifically, in a filter apparatus, a cake layer having deposited thereon foreign materials, which are subjects to be filtered, is formed on the surface of a filter body, as the filter apparatus is used. This cake layer maintains the filter efficiency. However, in the case of the filter body 13 having the double structure illustrated in FIG. 8, a cake layer is formed on the filter medium 11 at the side of the surface layer that is the flow-in side of a fluid, while a cake layer is not formed on the filter medium 12 at the side of the next layer that is the flow-out side of the fluid. This is because the filter medium 12 at the side of the next layer is in intimate contact with the filter medium 11 at the side of the surface layer. Therefore, there arises a problem that the filter efficiency is likely to reduce.

On the other hand, the Patent Document 1 discloses a filter apparatus having a double structure in which a cylindrical filter element having a small diameter is inserted inside a cylindrical filter element. This filter apparatus can promote the production of a cake layer on not only a filter body of the filter element at the outer peripheral side but also a filter body of the filter element at the inner peripheral side.

Patent Document 1: Japanese Unexamined Patent Publilcation No. 2000-130142

However, the filter apparatus disclosed in the Patent Document 1 has the double structure in which the cylindrical filter element having a small diameter is inserted inside the cylindrical filter element, so that the outer diameter of the whole filter apparatus should be increased, thereby entailing a problem of increasing the size of the apparatus. Further, since the two filter elements, each having a different diameter, are assembled, so that the structure becomes complicated, and the assembling property is deteriorated.

US 1,101,811 discloses a filter pad comprising a layer of gauze, and a layer of filter material free from said gauze through the greater area thereof. The filtering material extends into the gauze at spaced intervals to reinforce the pad.

DE 101 55 879 A1 discloses a filter element comprising two sheet-like filter media arranged at opposite sides of a mesh member.

US 3,260,370 discloses a three-stage filter element comprising a first stage portion with a first filter paper sheet, a second stage portion with a second filter paper sheet, a plurality of paper strands loosely woven to form an open weave cloth sandwiched between the first and second filter paper sheets. The three-stage filter may be pleated and used in a canister-type filter cartridge.

WO 2004/0411407 A1 discloses a filter element in the form of a filter cylinder formed by a series of adjacent folds of filter material, wherein said folds extend inside an intermediate region between a liquid permeable inner support tube and an outer envelope surface.

WO 00/40319 discloses a pleated filter element including a plurality of longitudinal extending pleats including outwardly radiating primary pleats and inwardly radiating secondary pleats with at least one secondary pleat positioned between two adjacent primary pleats. The radial height of the primary pleats is bigger than the radial heat of the secondary pleats.

JP 2003175309 A discloses a filter element with a net that is interposed between upper and lower sheets of a known woven fabric.

JP 60034329 Y2 discloses a filter element with two filter media with a space there between. The filter media are formed with pleats having different heights so that the space is formed between them.

### DISCLOSURE OF THE INVENTION

The present invention is to provide a filter apparatus that can enhance a filtering efficiency without increasing a size of a whole apparatus and without causing a complicated structure or deterioration in the assembling property, and that can maintain the filtering efficiency.

Appended claim 1 is directed towards a filter apparatus providing a solution of the object as mentioned above.

Sub-claims 2 and 3 are directed towards advantageous embodiments of the inventive filter apparatus.

Appended claim 4 characterizes a filter body that is used for a filter element of a filter apparatus to provide a solution on the object as mentioned above.

Sub-claims 5 and 6 are directed towards advantageous embodiments of the inventive filter body.

### BRIEF DESCRIPTION OF THE DRAWINGS

FIG. 1 is a partially cutout front view of a filter apparatus according to one embodiment of the present invention;
FIG. 2 is a plan view of a filter body;
FIG. 3 is a plan view of the filter body that is enlarged for showing its structure;
FIG. 4 is a schematic diagram showing a variation of a filter medium used for the filter body;
FIG. 5 is a plan view of a filter body that is enlarged for showing its structure according to another embodiment;
FIG. 6 is a plan view of a filter body according to the present invention that is enlarged for showing its structure;
FIG. 7 is a schematic diagram showing a variation of a filter unit conventionally used; and
FIG. 8 is a plan view of a conventional filter body with a double structure for showing its structure.

### BEST MODE FOR CARRYING OUT THE PRESENT INVENTION

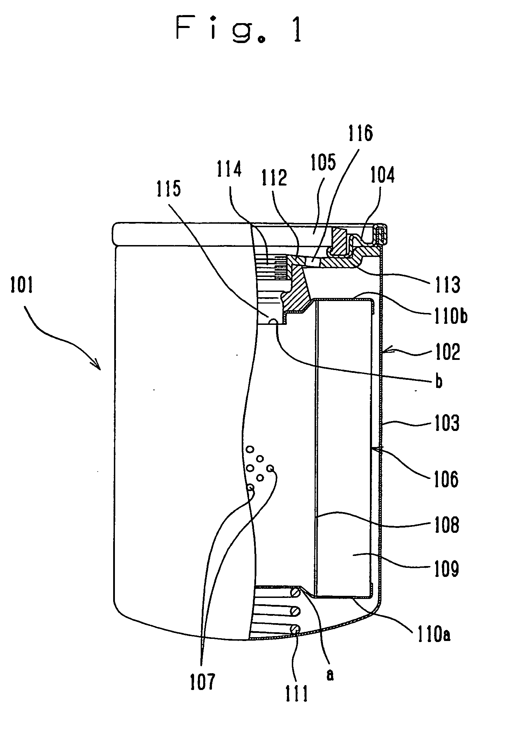

One embodiment will be explained with reference to FIGS. 1 to 5. The embodiment is an application example of a fuel filter apparatus for filtering a fuel.

FIG. 1 is a partially cutout front view of a filter apparatus. A filter apparatus 101 according to this embodiment has a structure so as to be detachably mounted to a filter head (not shown) mounted to an engine (not shown) or the like. Specifically, the filter head is arranged in a flow path of a fuel that needs filtration by the filter apparatus 101. The filter head has an area where the fuel before the filtration is supplied to the filter apparatus 101, and an area where the fuel after the filtration is supplied from the filter apparatus 101. The filter head has a cylindrical member (not shown), in which the outer periphery of the cylindrical member is defined as the area where the fuel before the filtration is supplied to the filter apparatus 101, while the inner periphery of the cylindrical member is defined as the area where the fuel after the filtration is supplied from the filter apparatus 101. The filter apparatus 101 is mounted to the filter head described above, so that it filters the fuel before the filtration and returns the filtered fuel to the filter apparatus.

The filter apparatus 101 has a housing 102 that is detachably mounted to the unillustrated filter head. The housing 102 has a lower cylindrical housing 103 made of a metal thin plate, i.e., iron plate. The lower housing 103 has a cap shape in which one end (lower end in FIG. 1) thereof is closed and the other end (upper end in FIG. 1) thereof is open. An annular upper housing 104 is fixed by caulking at the opening portion of the upper side of the lower housing 103. A cylindrical packing 105 is fixed to the upper housing 104 by caulking. The packing 105 functions to retain a sealing performance between the filter head and the filter apparatus 101 when the filter apparatus 101 is mounted to the unillustrated filter head.

A filter element 106 is incorporated inside the housing 102. The filter element 106 is formed such that a cylindrical filter body 109 is mounted to the outside of an inner cylinder 108 having a great number of holes 107 open in a mesh-like form. The inner cylinder 108 and the filter body 109 are integrally bonded and held by a pair of disc-like holding plates 110a and 110b.

The filter apparatus 101 has a mechanism so as to hold the filter element 106 in the housing 102 as separating a flow-in side of the fuel and a flow-out side from each other, of the fuel to the filter element 106. As this mechanism, the filter apparatus 101 has a coil spring 111 and a cover 112.

The coil spring 111 elastically holds the filter element 106 at the closed end of the lower housing 103. The coil spring 111 is positioned between the inner wall of the closed end of the lower housing 103 and the holding plate 110a that is one of the holding plates constituting the filter element 106. The holding plate 110a has a structure in which a center thereof is recessed in order to stably hold the coil spring 111. In FIG. 1, the recessed portion for stably holding the coil spring 111 is designated by a mark a.

The cover 112 is a member having a screw portion 114 at the center portion of a disc-like partition wall 113 having a diameter same as the inner diameter of the lower housing 103. A packing 115 is sandwiched between the cover 112 and the filter element 106 so as to separate the flow-in side and flow-out side of the fuel.

The packing 115 is brought into contact with the other holding plate 110b constituting the filter element 106. The other holding plate 110b has a structure in which a center thereof is recessed in order to stably hold the packing 115. In FIG. 1, the recessed portion for stably holding the packing 115 is designated by a mark b.

The upper housing 104 is mounted to the cover 112 by a spot welding or other methods. The cover 112 having the upper housing 104 mounted thereto is inserted into the lower housing 103 that stores the coil spring 111, the filter element 106, and the packing 115 in this order. With this state, the upper end of the lower housing 103 and the outer periphery of the upper housing 104 are caulked, whereby the upper housing 104 is mounted to the lower housing 103.

The screw section 114 of the cover 112 makes it possible to screw the filter apparatus 101 to the unillustrated filter head. A circulation hole 116 is formed at a part of the partition wall 113.

The coil spring 111, the packing 115, and the cover 112 are mounted in this manner, whereby the filter element 106 is held in the housing 102 in which the flow-in side and the flow-out side of the fuel to the filter element 106 are separated. Specifically, in the filter head, the portion screwed to the screw portion 114 becomes the above-mentioned cylindrical member that separates the area where the fuel before the filtration is supplied thereto and the area where the fuel after the filtration is supplied therefrom. Therefore, the filter apparatus 101 receives the supply of the fuel at the inner periphery of the packing 105 from the outer periphery of the unillustrated cylindrical member of the unillustrated filter head, and guides the supplied fuel toward the outer periphery of the filter element 106 through the circulation hole 116. This area is the flow-in side of the fuel to the filter element 106. The fuel reaches the inner periphery of the filter element 106 through the filter body 109 from the outer periphery of the filter element 106, and during this process, the fuel is filtered. The filtered fuel is supplied to the inner periphery of the cylindrical member of the filter head screwed to the screw portion 114. Accordingly, this area is the flow-out side of the fuel from the filter element 106.

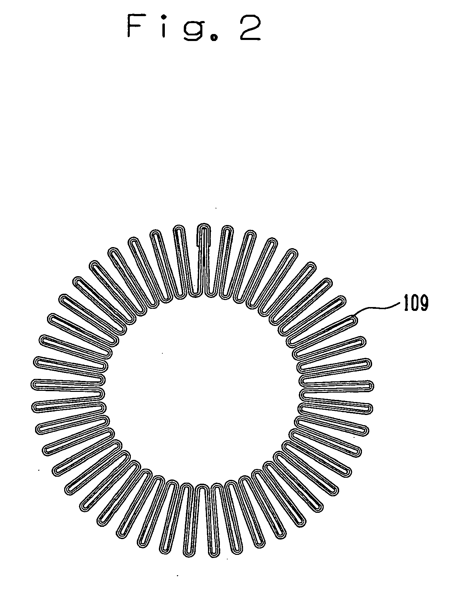

FIG. 2 is a plan view of a filter body 109. The filter body 109 is held in a pleated shape between a pair of holding plates 110a and 110b. Specifically, the filter body 109 has a sheet-like shape at the beginning, and this sheet-like member is formed to have a pleated shape. Then, both ends are annularly bonded to form a doughnut-like shape. As shown in FIG. 2, the filter body 109 has a multi-layer structure. The multi-layer structure of the filter body 109 will be explained below in detail.

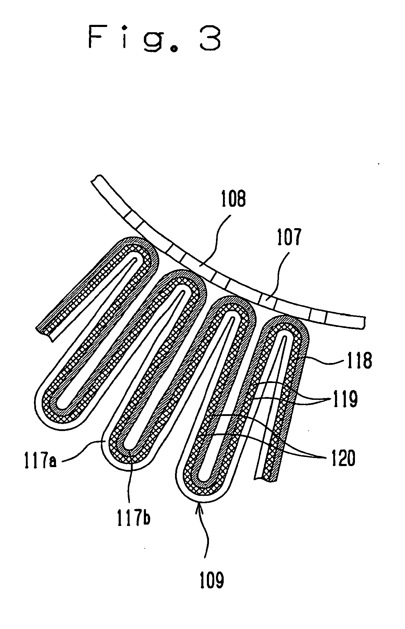

FIG. 3 is a plan view of the filter body 109 that is enlarged for showing its structure. For example, the filter body 109 has two filter media 117a and 117b. These filter media 117a and 117b are respectively held on a front and back surfaces of a mesh member 118. The mesh member 118 has countless space portions 120 among a mesh structure 119. Therefore, the two filter media 117a and 117b are spaced by the presence of the space portion 120. The filter media 117a and 117b are made of, for example, a material such as a glass, polyester, cellulose, or the like. The filter medium 117a is positioned at the outer periphery, while the filter medium 117b is positioned at the inner periphery.

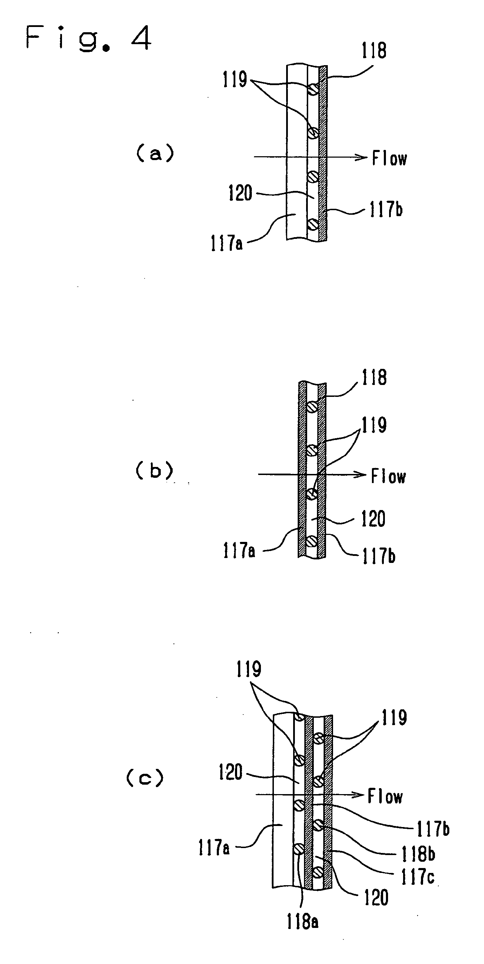

FIG. 4 is a schematic diagram illustrating a variation of the filter medium used for the filter body 109.

A filter body 109 illustrated in FIG. 4 (a) has a structure in which one filter medium 117a positioned at the outer periphery is defined as a prefilter medium while the other filter medium 117b positioned at the inner periphery is defined as a main filter medium. As one example, the filter medium 117a having a capture efficiency of dust with 5 µm of about 50 % and the other filter medium 117b having the same capture efficiency of about 90 % are used.

A filter body 109 illustrated in FIG. 4 (b) has a structure in which both of the two filter media 117a and 117b are defined as the main filter media. The filter medium having a capture efficiency of dust with 5 µm of about 90 % is used for the filter media 117a and 117b.

A filter body 109 illustrated in FIG. 4 (c) has three filter media 117a, 117b, and 117c. Two mesh members 118 are prepared, wherein one filter medium 117a, which serves as a prefilter medium, and one filter medium 117b, which serves as a main filter medium, are held on the front and back surfaces of one mesh member 118a. On the other hand, the filter medium 117b, which serves as the main filter medium, and one filter medium 117c, which similarly serves as the main filter medium, are held on the front and back surfaces of the other mesh member 118b. A filter medium having a capture efficiency of dust with 5 µm of about 50 % is used for the filter medium 117a serving as the prefilter medium, and a filter medium having the same capture efficiency of about 90 % is used for the filter media 117b and 117c serving as the main filter medium.

In the structure described above, the fuel to be filtered is guided to the outer periphery of the filter element 106 from the inner periphery of the packing 105 through the circulation hole 116. Then, the fuel to be filtered passes through the filter body 109 from the outer periphery of the filter element 106 to reach the inner periphery of the filter element 106, and during this process, the fuel to be filtered is filtered. The filtered fuel is supplied to the inner periphery of the cylindrical member of the filter head that is screwed to the screw portion 114, and then, supplied to an unillustrated engine at the side of the filter head.

During the filtering process of a fuel by the filter element 106, the filter element 106 exhibits excellent filtering efficiency of foreign matters by means of the filter body 109 having plural laminated filter media 117 (117a and 117b, or 117a, 117b and 117c). This will be explained with reference to the variations illustrated in FIGS. 4 (a), (b) and (c), for example. In the filter body 109 illustrated in FIG. 4 (a) , the dust capture efficiency of the filter medium 117a serving as the prefilter medium is about 50 %, and the dust capture efficiency of the filter medium 117b serving as the main filter medium is about 90 %, so that the dust filtering efficiency of the filter body 109 is 95 %. Supposing that 100 foreign matters are contained in the fuel, for example, 50 foreign matters are filtered when the fuel passes through the one filter medium 117a serving as the prefilter medium, and the 45 foreign matters of the remaining 50 foreign matters are filtered when the fuel passes through the other filter medium 117b serving as the main filter medium, with the result that the remaining foreign matters are five. Similarly, in the filter body 109 illustrated in FIG. 4 (b) , the dust capture efficiencies of the filtermedium 117a and the filter medium 117b both serving as the main filter media are respectively about 90 %, so that the dust filtering efficiency of the filter body 109 is 99 %. Supposing that 100 foreign matters are contained in the fuel, for example, 90 foreign matters are filtered when the fuel passes through the one filter medium 117a, and the 9 foreign matters of the remaining 10 foreign matters are filtered when the fuel passes through the other filter medium 117b, with the result that the remaining foreign matter is one. Further, in the filter body 109 illustrated in FIG. 4 (c), the dust capture efficiency of the filter medium 117a serving as the prefilter medium is about 50 %, and the dust capture efficiencies of the filter media 117b and 117c both serving as the main filter media are respectively about 90 %, so that the dust filtering efficiency of the filter body 109 is 99.5 %. Supposing that 100 foreign matters are contained in the fuel, for example, 50 foreign matters are filtered when the fuel passes through the one filter medium 117a serving as the prefilter medium, the 45 foreign matters of the remaining 50 foreign matters are filtered when the fuel passes through the other filter medium 117b serving as the main filter medium, with the result that the remaining foreign matters are five. Further, when the fuel passes through the other filter medium 117c serving as the main filter medium, the remaining five foreign matters are reduced to 0.5 foreign matters. As described above, the filter element 106 according to the present embodiment can achieve excellent filtering efficiency of foreign manners by means of the filter body 109 having the plural laminated filter media 117 (117a and 117b, or 117a, 117b and 117c).

In the filter element 106, the plural filter media 117 (117a and 117b, or 117a, 117b and 117c) constituting the filter body 109 are spaced according to the presence of the countless space portions 120 of the mesh member 118. Therefore, this structure promotes the production of the cake layer on the respective filter media 117 (117a and 117b, or 117a, 117b and 117c) of each layer, whereby the filtering efficiency can be maintained.

Accordingly, compared to a filter apparatus having a conventional structure employing a single filter body, the filter apparatus 101 according to the described embodiment can enhance the filtering efficiency by means of the plural filter media 117 (117a and 117b, or 117a, 117b and 117c) only by causing a change in which the whole thickness of the filter body 109 increases slightly, i.e., without increasing the size of the whole apparatus and without causing a complicated structure or the deterioration in assembling property. Further, the filter apparatus 101 can promote the production of the cake layer on the respective filter media 117 (117a and 117b, or 117a, 117b and 117c) of each layer, whereby the filtering efficiency can be maintained.

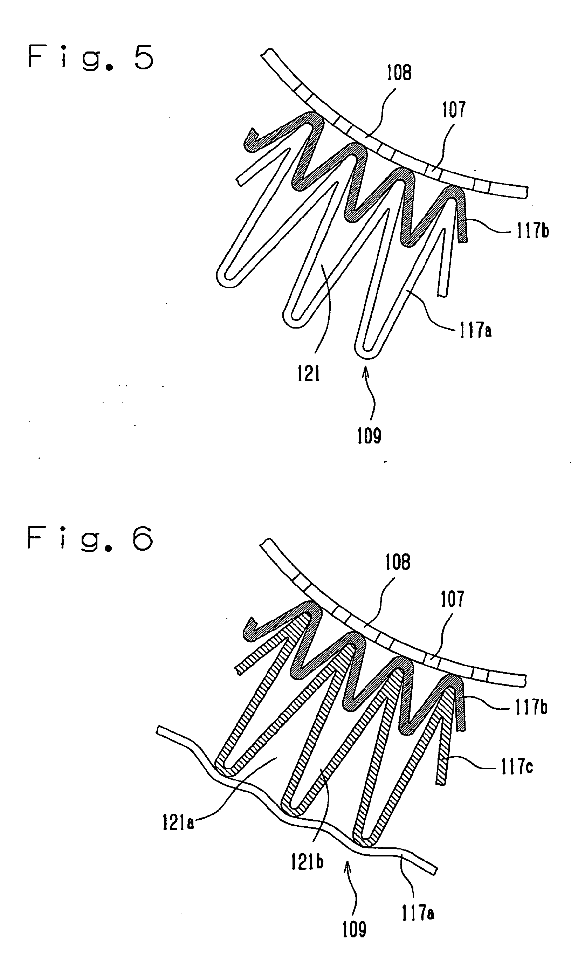

FIG. 5 is a plan view of the filter body 109 that is enlarged for showing its structure according to another embodiment. Like parts are designated by like numerals, and the explanation thereof is omitted.

In the present embodiment, the mesh member 118 is not provided as the constituent of the filter body 109, but two filter media 117a and 117b are contrived such that they are laminated to be arranged with a gap only by changing their shapes. Specifically, two filter media 117a and 117b are arranged in such a manner that the heights of pleats forming the pleated shape are different from each other. In the present embodiment, the height of the pleat forming the pleated shape of one filter medium 117a positioned at the outer peripheral side is higher. Accordingly, a space portion 121 is formed between two filter media 117a and 117b.

Like the aforesaid embodiment, various variations are made with respect to the two filter media 117a and 117b in this embodiment. Specifically, their filtering efficiencies may be made different from each other, or the filter media having the same filtering efficiency may be used. For example, the filter medium 117a at the outer peripheral side is defined as the prefilter medium having relatively low filtering efficiency, while the other filter medium 117b at the inner peripheral side is defined as the main filter medium having high filtering efficiency. Alternatively, both of two filter media 117a and 117b can be defined as the main filter media having high filtering efficiency. The filter body 109 exhibits excellent filtering efficiency of foreign matters by the two filter media 117a and 117b described above. The presence of the space portion 121 between the two filter media 117a and 117b can promote the generation of the cake layer on the respective filter media 117a and 117b, whereby the filter body 109 can maintain the filtering efficiency.

FIG. 6 is a plan view of a filter body 109 that is enlarged for showing its structure according to the present invention. The components same as those in the previous two embodiments are designated by the same numerals, and the explanation thereof is omitted.

In the present embodiment, the mesh member 118 is not provided as the constituent of the filter body 109, but three filter media 117a, 117b and 117c are contrived such that they are laminated to be arranged with a gap only by changing their shapes. Specifically, the filter body 109 is formed such that an intermediate filter medium 117c, which has the pleated shape having the pleat whose height is higher than the height of the pleat of the pleated shape of the first and the second filter media 117a and 117b, is interposed between the first filtermedium 117a arranged at the flow-in side of the fluid and the second filter medium 117b arranged at the flow-out side of the fluid. The height of the pleat forming the pleated shape of the first filter medium 117a and the height of the pleat forming the pleated shape of the second filter medium 117b may be the same or different. With this structure, a space portion 121a is formed between the first filter medium 117a and the intermediate filter medium 117c, and a space portion 121b is formed between the intermediate filter medium 117c and the second filter medium 117b.

In this embodiment too, various variations are made with respect to the three filter media 117a, 117b and 117c. Specifically, their filtering efficienciesmaybe made different from each other, or the filter media having the same filtering efficiency may be used. For example, the filter medium 117a at the outermost peripheral side is defined as the prefilter medium having relatively low filtering efficiency, while the other two filter media 117b and 117c at the inner peripheral side are defined as the main filter media having high filtering efficiency. Alternatively, all of three filter media 117a, 117b and 117c can be defined as the main filter media having high filtering efficiency. The filter body 109 exhibits excellent filtering efficiency of foreign matters by these filter media 117 (the first filter medium 117a, the intermediate filter medium 117c, the second filter medium 117b) described above. The presence of the space portion 121a between the first filter medium 117a and the intermediate filter medium 117c and the space portion 121b between the intermediate filter medium 117c and the second filter medium 117b can promote the generation of the cake layer on the respective filter media 117 (the first filter medium 117a, the intermediate filter medium 117c, the second filter medium 117b), whereby the filter body 109 can maintain the filtering efficiency.

## Claims

1. A filter apparatus comprising:
a cylindrical housing (103) whose one side is open;
a filter element (106) that is housed in the housing and has a pleated filter body (109) formed by laminating plural sheet-like filter media (117a, 117b, 117c) arranged with a gap, with the pleated shape of the filter body retained; and
a mechanism (111, 112) that holds the filter element in the housing as separating a flow-in side and a flow-out side from each other, of a fluid with respect to the filter element,
wherein
the plural filter media are arranged with a gap by the heights of the pleats forming the pleated shapes of the filter media being different from each other;
**characterized in that**
the filter body (109) is formed such that an intermediate filter medium (117c), which has a pleated shape having a pleat whose height is higher than the height of a pleat forming the pleated shapes of the first and the second filter media (117a, 117b), is interposed between the first filter medium and the second filter medium arranged respectively at the flow-in side and the flow-out side of the fluid.

2. A filter apparatus according to claim 1, wherein
the filter medium (117b) positioned at the flow-out side of the fluid has a filtering efficiency higher than that of the filter medium (117a) positioned at the flow-in side.

3. A filter apparatus according to claim 1 or 2, wherein
the filter body (109) includes at least two filter media having the same filtering efficiency.

4. A filter body (109) that is used for a filter element (106) of a filter apparatus and is formed into a pleated shape that is retained, wherein
a plural sheet-like filter media (117a, 117b, 117c) are laminated and arranged with a gap by the heights of the pleats forming the pleated shapes of the filter media being different from each other;
**characterized in that**
the filter body (109) is formed such that an intermediate filter medium (117c), which has a pleated shape having a pleat whose height is higher than the height of a pleat forming the pleated shapes of the first and the second filter media (117a, 117b), is interposed between the first filter medium and the second filter medium arranged respectively at the flow-in side and the flow-out side of the fluid.

5. A filter body according to claim 4, wherein
the filter medium (117b) positioned at the flow-out side of the fluid has a filtering efficiency higher than that of the filter medium (117a) positioned at the flow-in side.

6. A filter body according to claim 3 or 4, wherein
the filter body (109) includes at least two filter media having the same filtering efficiency.

## Patentansprüche

1. Filtervorrichtung, mit:
einem zylindrischen Gehäuse (103) dessen eine Seite offen ist;
einem Filterelement (106), das in dem Gehäuse untergebracht ist und einen gefalteten Filterkörper (109) aufweist, der durch Laminieren mehrerer schichtartiger Filtermedien (117a, 117b, 117c), die mit einer Lücke angeordnet sind, ausgebildet ist, wobei die gefaltete Form des Filterkörpers beibehalten wird; und
einem Mechanismus (111, 112), der das Filterelement in dem Gehäuse hält, so dass es eine Einströmseite und eine Ausströmseite eines Fluids bezüglich des Filterelements voneinander trennt, wobei
die mehreren Filtermedien **dadurch**, dass sich die Höhen der Falten die die gefalteten Formen der Filtermedien bilden voneinander unterscheiden, mit einer Lücke angeordnet sind;
**dadurch gekennzeichnet, dass**
der Filterkörper (109) so ausgebildet ist, dass ein dazwischenliegendes Filtermedium (117c), das eine gefaltete Form mit einer Falte hat, deren Höhe höher als die Höhe einer Falte ist, die die gefalteten Formen des ersten und zweiten Filtermediums (117a, 117b) bildet, zwischen dem ersten Filtermedium und dem zweiten Filtermedium liegt, die auf der Einströmseite bzw. der Ausströmseite des Fluids angeordnet sind.

2. Filtervorrichtung nach Anspruch 1, wobei
das auf der Ausströmseite des Fluids positionierte Filtermedium (117b) eine größere Filtereffizienz als das auf der Einströmseite positionierte Filtermedium (117a) hat.

3. Filtervorrichtung nach Anspruch 1 oder 2, wobei
der Filterkörper (109) zumindest zwei Filtermedien mit der gleichen Filtereffizienz enthält.

4. Filterkörper (109), der für ein Filterelement (106) einer Filtervorrichtung verwendet wird und in eine gefaltete Form ausgebildet ist, die beibehalten wird, wobei
mehrere schichtartige Filtermedien (117a, 117b, 117c) laminiert und **dadurch**, dass die Höhen der Falten, die die gefalteten Formen des Filtermediums bilden, unterschiedlich sind, mit einer Lücke angeordnet sind;
**dadurch gekennzeichnet, dass**
der Filterkörper (109) so ausgebildet ist, das ein dazwischenliegendes Filtermedium (117c), das eine gefaltete Form mit einer Falte aufweist, deren Höhe höher als die Höhe einer Falte ist, die die gefalteten Formen des ersten und des zweiten Filtermediums (117a, 117b) bildet, zwischen dem ersten Filtermedium und dem zweiten Filtermedium liegt, die auf der Einströmseite bzw. der Ausströmseite des Fluids angeordnet sind.

5. Filterkörper nach Anspruch 4, wobei
das auf der Ausströmseite des Fluids positionierte Filtermedium (117b) eine Filtereffizienz aufweist, die größer ist als die des auf der Einströmseite positionierten Filtermediums (117a).

6. Filterkörper nach Anspruch 3 oder 4, wobei
der Filterkörper (109) zumindest zwei Filtermedien mit der gleichen Filtereffizienz aufweist.

## Revendications

1. Appareil de filtration comprenant :
un boîtier cylindrique (103) dont un côté est ouvert ;
un élément filtrant (106) qui est logé dans le boîtier et qui présente un corps de filtration plissé (109) formé par stratification de multiples supports filtrants en feuille (117a, 117b, 117c) aménagés avec un espacement, la forme plissée du corps de filtration étant maintenue ; et
un mécanisme (111, 112) qui maintient l'élément filtrant dans le boîtier de manière à séparer l'un de l'autre un côté d'écoulement entrant et un côté d'écoulement sortant d'un liquide par rapport à l'élément filtrant, dans lequel :
les multiples supports filtrants sont aménagés avec un espacement en raison des hauteurs des plis constituant les formes plissées des supports filtrants qui sont différentes les unes des autres ; **caractérisé en ce que** :
le corps de filtration (109) est formé de manière qu'un support filtrant intermédiaire (117c), qui présente une forme plissée ayant un pli dont la hauteur est supérieure à la hauteur d'un pli constituant les formes plissées des premier et second supports filtrants (117a, 117b), soit intercalé entre le premier support filtrant et le second support filtrant, lesquels sont respectivement aménagés du côté de l'écoulement entrant et du côté de l'écoulement sortant du liquide.

2. Appareil de filtration selon la revendication 1, dans lequel :
le support filtrant (117b) positionné du côté de l'écoulement sortant du liquide présente une efficacité de filtration supérieure à celle du support filtrant (117a) positionné du côté de l'écoulement entrant.

3. Appareil de filtration selon la revendication 1 ou 2, dans lequel :
le corps de filtration (109) comprend au moins deux supports filtrants ayant la même efficacité de filtration.

4. Corps de filtration (109) qui est utilisé pour un élément filtrant (106) d'un appareil de filtration et présente une forme plissée qui est maintenue, dans lequel :
de multiples supports filtrants en feuille (117a, 117b, 117c) sont stratifiés et aménagés avec un espacement en raison des hauteurs des plis constituant les formes plissées des supports filtrants qui sont différentes les unes des autres ;
**caractérisé en ce que**
le corps de filtration (109) est formé de sorte qu'un support filtrant intermédiaire (117c), qui présente une forme plissée ayant un pli dont la hauteur est supérieure à la hauteur d'un pli constituant les formes plissées des premier et second supports filtrants (117a, 117b), soit intercalé entre le premier support filtrant et le second support filtrant, lesquels sont respectivement aménagés du côté de l'écoulement entrant et du côté de l'écoulement sortant du liquide.

5. Corps de filtration selon la revendication 4, dans lequel :
le support filtrant (117b) positionné du côté de l'écoulement sortant du liquide présente une efficacité de filtration supérieure à celle du support filtrant (117a) positionné du côté de l'écoulement entrant.

6. Corps de filtration selon la revendication 3 ou 4, dans lequel :
le corps de filtration (109) comprend au moins deux supports filtrants ayant la même efficacité de filtration.
